# EUROPEAN PATENT APPLICATION

(11) **EP 2 621 160 A1**
(43) Date of publication of application: **31.07.2013**
(21) Application number: 11826757.4
(22) Date of filing: 12.09.2011
(51) Int. Cl.: H04N 5/232, H04N 5/225, H04N 5/91, H04N 5/93

(54) **IMAGE PICK-UP DEVICE, IMAGE TRANSFER METHOD AND PROGRAM**

(30) Priority: 22.09.2010 JP 2010211805
(71) Applicant: NEC CASIO Mobile Communications, Ltd., Kawasaki-shi Kanagawa 211-8666 (JP)
(72) Inventor: SAKANABA Takayuki, Kawasaki-shi Kanagawa 211-8666 (JP)
(74) Representative: Vossius & Partner
(86) International application number: PCT/JP2011/070733
(87) International publication number: WO 2012/039311

(57) **Abstract**

Even when image data in which a top-bottom orientation has been recorded is transmitted to equipment that is provided outside a photographing apparatus and does not support an image rotation function, an image can be displayed in an appropriate top-bottom orientation. A photographing apparatus includes a photographing unit; an addition unit which adds data indicating a top-bottom orientation at the time of photography to image data of an image captured using the photographing unit and stores resultant image data, a transmission unit which transmits the image data to external equipment; and an editing unit which rotates the top-bottom orientation of the image corresponding to the image data prior to transmitting the image data to the external equipment.

## Description

### TECHNICAL FIELD

The present invention relates to a mobile phone with a digital camera function, a digital camera, or the like, and to a photographing apparatus, an image transfer method, and a program that transmit data of a captured image through electronic mail or transmit the data to external equipment such as a memory card.

### BACKGROUND ART

A current digital photograph (hereinafter referred to as image data) can be readily taken using a mobile phone with a digital camera function, a digital camera, or the like, and is becoming commonplace. Furthermore, the image data is generally converted into an electronic file in an EXIF format (exchangeable image file format) formulated by the Japan Electronic Industry Development Association (JEIDA).

Now, a modem mobile phone with a digital camera function, a modern digital camera, or the like may have a mechanism capable of recognizing an orientation in which a vertical direction of camera equipment faces using an acceleration sensor or the like, in addition to a camera function. This enables a top-bottom orientation at the time of photography to be detected and recorded in a specific location (in an Orientation Tag) within captured image data in the EXIF format.

Accordingly, it is possible to rotate top-bottom of the image data in accordance with an orientation of the camera equipment at the time of photography by referring to the Orientation Tag at the time of reproduction and display the resultant image data. In practice, there is display equipment that performs display in which the top-bottom orientation at the time of photography is reproduced using such a function.

Meanwhile, when the image data stored in the EXIF format is displayed, if there is data indicating the top-bottom orientation of the image data within an Orientation Tag, rotating the image data in accordance with such data and displaying the resultant image is an appropriate method for displaying image data.

Typically, in a system which stores a top-bottom orientation at the time of photography within an Orientation Tag of image data using an acceleration sensor or the like, when a function of displaying captured image data is further provided, the top-bottom orientation at the time of photography is read from the Orientation Tag and the image data is appropriately rotated to be in an upright orientation and is displayed.

For example, Patent Document 1 proposes technology for rotation of image data in accordance with an Orientation Tag within an EXIF format file and reconstruction of EXIF information thereof. With this technology, in a system that performs rotation and/or various corrections on a main image in accordance with an Orientation Tag, when image data as a result of the corrections is stored, a thumbnail image and other EXIF parameters typically stored within an EXIF format file are updated to reflect the rotation and/or the corrections of the main image and are stored.

Furthermore, Patent Document 2 proposes a system that rotates an image in an appropriate orientation. This system discloses a procedure including the above-described rotation of an image in accordance with the Orientation Tag, and proposes the technology how to rotate the image so as to be in an upright orientation.

Furthermore, Patent Document 3 describes a process of rotating a captured image and proposes technology for rotating the image in accordance with top-bottom information and displaying the resultant image. Furthermore, Patent Document 4 proposes technology for performing a rotation process of an image when the image is converted into a file and stored after photography.

### Prior Art Documents

### Patent Documents

Patent Document 1: Japanese Patent No. 4246515
Patent Document 2: Japanese Unexamined Patent Application, First Publication No. 2005-340918
Patent Document 3: Japanese Unexamined Patent Application, First Publication No. Hei 10-173984
Patent Document 4: Japanese Unexamined Patent Application, First Publication No. Hei 11-098406

### SUMMARY OF INVENTION

### Problems to be solved by the Invention

Meanwhile, not all systems having a function of displaying image data have a function of performing a rotation process on image data in accordance with information (a top-bottom orientation) recorded in a specific location within the image data of an EXIF format, such as an Orientation Tag. In such non-compliant systems, when image data captured and stored by a compliant system that performs a rotation process in accordance with an Orientation Tag is attempted to be displayed, the image data may not be displayed in an appropriate top-bottom orientation. In other words, the top-bottom orientation of the Orientation Tag cannot be reflected.

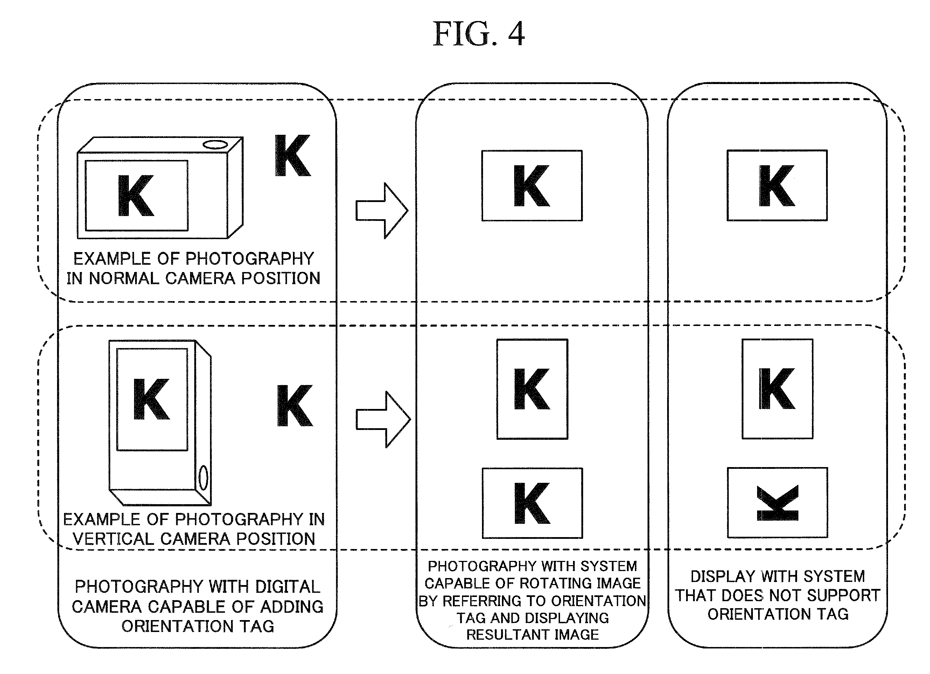

FIG. 4 is a conceptual diagram illustrating the difference between a compliant system capable of rotating an image in accordance with an Orientation Tag and a non-compliant system. When photography has been performed in a normal camera position using a digital camera capable of adding an Orientation Tag, either a compliant system capable of rotating an image by referring to the Orientation Tag and displaying the resultant image or a non-compliant system that does not support the Orientation Tag can correctly display the image in the normal position.

In contrast, when photography has been performed in a vertical camera position using the digital camera capable of adding an Orientation Tag, the compliant system capable of rotating an image by referring to the Orientation Tag and displaying the resultant image can correctly display either in a normal position or in a vertical position, while the non-compliant system that does not support the Orientation Tag cannot correctly display the image in the normal position.

That is, when image data captured in the normal position of the camera is displayed, there is no difference between the compliant system capable of supporting the Orientation Tag and the non-compliant system; however, when image data captured in the vertical position of the camera is displayed, there is a difference between the compliant system and the non-compliant system.

In this way, in accordance with Patent Documents 1 to 4 described above, there is no problem in the compliant system having a function of rotating image data in accordance with the Orientation Tag; however, when an image captured and stored in the compliant system is attempted to be displayed in the non-compliant system (e.g., an external image display apparatus), there is a problem in that the image cannot be displayed in an appropriate top-bottom orientation.

The present invention has been made in view of the circumstances described above, and an exemplary object thereof is to provide a photographing apparatus, an image transfer method, and a program capable of displaying image data in which a top-bottom orientation has been recorded in an appropriate top-bottom orientation even when the image data is transmitted to equipment that is provided outside the photographing apparatus and that does not support an image rotation function.

### Means for Solving the Problems

In order to solve the above-described problem, the present invention is a photographing apparatus including: a photographing unit; an addition unit which adds data indicating a top-bottom orientation at the time of photography to image data of an image captured using the photographing unit and stores resultant image data; a transmission unit which transmits the image data to external equipment; and an editing unit which rotates the top-bottom orientation of the image corresponding to the image data prior to transmitting the image data to the external equipment.

Furthermore, in order to solve the above-described problem, the present invention is an image transfer method including: rotating a top-bottom orientation of an image corresponding to image data prior to transmitting the image data to external equipment, the image data being captured using a photographing function and stored with data indicating the top-bottom orientation at the time of photography added, and transmitting the image data of the image whose top-bottom orientation has been rotated to the external equipment.

Furthermore, in order to solve the above-described problem, the present invention is a program for causing a computer of a photographing apparatus to execute: an addition function of adding data indicating a top-bottom orientation at the time of photography to image data of an image captured using a photographing function provided in the photographing apparatus and storing resultant data; an editing function of rotating the top-bottom orientation of the image corresponding to the image data prior to transmitting the image data to external equipment; and a transmitting function of transmitting image data of an image whose top-bottom orientation has been rotated to the external equipment.

### Exemplary Advantageous Effects of the Invention

In the present invention, even when image data in which a top-bottom orientation has been recorded is transmitted to equipment that is provided outside a photographing apparatus and does not support an image rotation function, this transmission destination can perform display in an appropriate top-bottom orientation.

### BRIEF DESCRIPTION OF DRAWINGS

FIG. 1 is a block diagram illustrating an example of a configuration of a mobile phone with a digital camera function in accordance with an exemplary embodiment of the present invention.
FIG. 2 is a flowchart illustrating operation of the mobile phone with a digital camera function in accordance with the present exemplary embodiment.
FIG. 3 is a schematic diagram illustrating a specific example of a manipulation screen of the present exemplary embodiment.
FIG. 4 is a conceptual diagram illustrating the difference between a compliant system capable of rotating an image in accordance with an Orientation Tag and a non-compliant system.

### MODES FOR CARRYING OUT THE INVENTION

Hereinafter, an exemplary embodiment of the present invention will be described with reference to the drawings. It is to be noted that a system configuration in which an acceleration sensor is mounted, the orientation of a camera at the time of photography can be identified, and its result can be stored as image data in an EXIF format as well as an image display system are known to those skilled in the art and are not directly related to the present invention, and thus detailed configurations thereof are omitted.

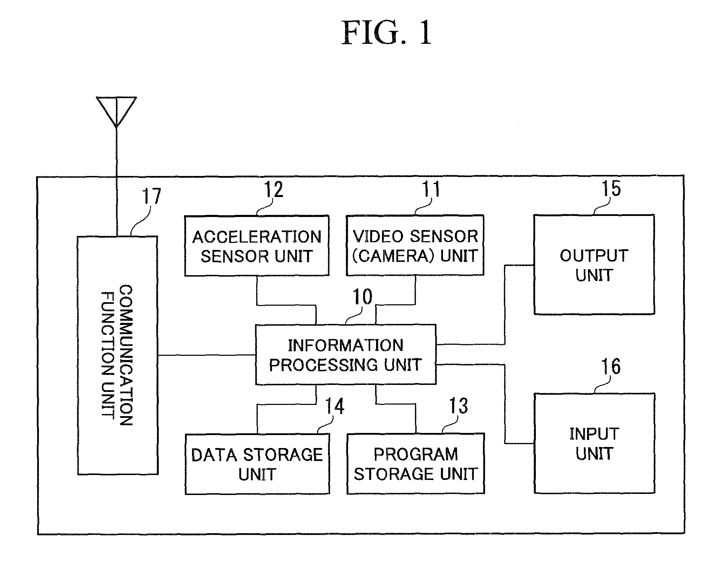

FIG. 1 is a block diagram illustrating an example of a configuration of a mobile phone with a digital camera function in accordance with an exemplary embodiment of the present invention. In FIG. 1, an information processing unit 10 controls operation of each unit of the mobile phone with a digital camera function. A computer that performs information processing and a memory that temporarily stores information to be dealt with are included in the information processing unit 10. A video sensor (camera) unit 11 provides a camera function with an electronic imaging device or a lens. An image captured by the video sensor (camera) unit 11 is sent to the information processing unit 10 under control of the information processing unit 10.

An acceleration sensor unit 12 senses acceleration in each of three axial directions or two axial directions to acquire orientation data indicating a top-bottom orientation of the mobile phone with a digital camera function. Accordingly, the top-bottom orientation of the mobile phone with a digital camera function at the time of photography, i.e., the top-bottom orientation of captured image data, can be recognized.

The orientation data sensed by the acceleration sensor unit 12 is supplied to the information processing unit 10. As a result, the information processing unit 10 can convert the captured image data into data in an EXIF format, and add the orientation data at the time of photography (the top-bottom orientation of the mobile phone with a digital camera function at the time of photography, i.e., the top-bottom orientation of the image data) to an Orientation Tag.

A program storage unit 13 stores a program executed in the information processing unit 10. The information processing unit 10 reads the program from the program storage unit 13 and executes the program to perform its operation. A data storage unit 14 stores the image in the EXIF format supplied from the information processing unit 10. Furthermore, the image data stored in the data storage unit 14 is read in response to a read command from the information processing unit 10.

An output unit 15 includes a display apparatus, and displays data such as images or text supplied from the information processing unit 10. An input unit 16 receives a command based on a manipulation of a person using buttons such as a shutter button, a dial, a touch panel, or the like. A communication function unit 17 is responsible for a radio function of the mobile phone, and accesses a wireless network to perform voice communication, data communication, or the like.

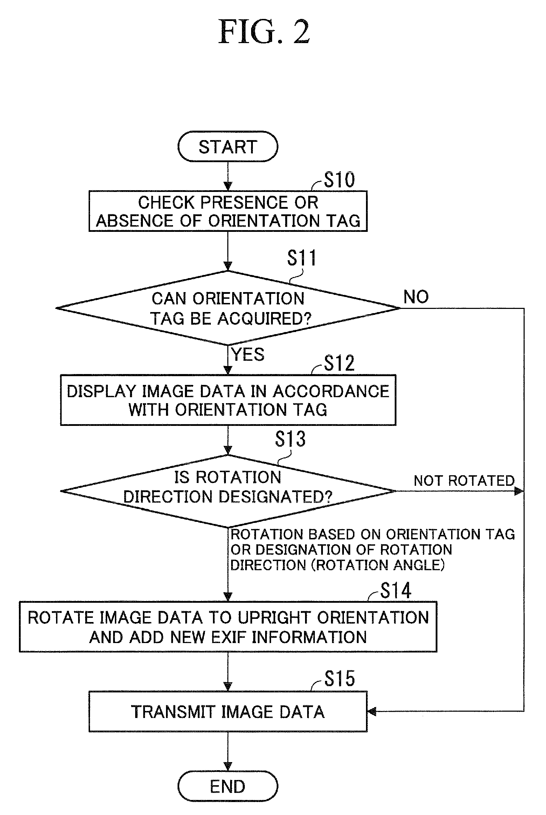

FIG. 2 is a flowchart illustrating operation of the mobile phone with a digital camera function in accordance with the present exemplary embodiment. When a command to transmit an image to the outside of a photographing apparatus (i.e., the mobile phone with a digital camera function) is input by a manipulator via the input unit 16, the flowchart shown in FIG. 2 is executed. First, presence or absence of the Orientation Tag in image data determined to be transmitted to the outside of the photographing apparatus is checked (step S 10) and a determination is made as to whether or not the Orientation Tag can be acquired (step S11). Then, if the Orientation Tag cannot be acquired, for example, when the image is not in the EXIF format (NO in step S11), a rotation process is not performed, and the image data is transmitted to the outside of the photographing apparatus (step S 15).

In contrast, if the Orientation Tag can be acquired (YES in step S11), target image data is displayed on the output unit 15 in accordance with a top-bottom orientation recorded in the Orientation Tag (step S12), and a determination is made as to whether or not a rotation direction is designated from the input unit 16 (step S 13).

Here, the manipulator can designate whether the image data is to be corrected by means of rotation to an upright orientation in accordance with the Orientation Tag (a process of rotating the image data in such a manner that image positions in a top-bottom orientation indicated by the Orientation Tag become upright and of newly storing the resultant image), rotation at a designated angle is to be performed, or the rotation is not to be performed. It is to be noted that the case in which the rotation is not to be performed is assumed to be a case in which the rotation is unnecessary, for example, a case in which even when an image is transmitted to the outside of the photographing apparatus, it is expected that the image is used in the compliant system that analyzes the Orientation Tag.

Furthermore, typically, the exemplary object can be achieved by performing a rotation process in accordance with the Orientation Tag, but the rotation at a designated angle may be selected in consideration of a case in which the top-bottom orientation recorded in the Orientation Tag is wrong or a case in which rotation causes a problematic composition.

Then, if the manipulator designates that the rotation is not to be performed ("not rotated" in step S13), the rotation process is not performed, and the image data is transmitted to the outside of the photographing apparatus (step S15).

In contrast, if the manipulator instructs the rotation to an upright orientation to be performed in accordance with the Orientation Tag or the rotation at a designated angle to be performed ("rotation based on the Orientation Tag or designation of a rotation direction (a rotation angle)" in step S 13), the rotation process is actually performed on the image data in accordance with the designation, information that needs to be updated in accordance with the rotation process that has been performed (e.g., a thumbnail image and/or the Orientation Tag) is reconstructed in accordance with an EXIF format and added to the image data subjected to the rotation process as new EXIF information (step S 14), and the image data is transmitted to the outside of the photographing apparatus (step S 15).

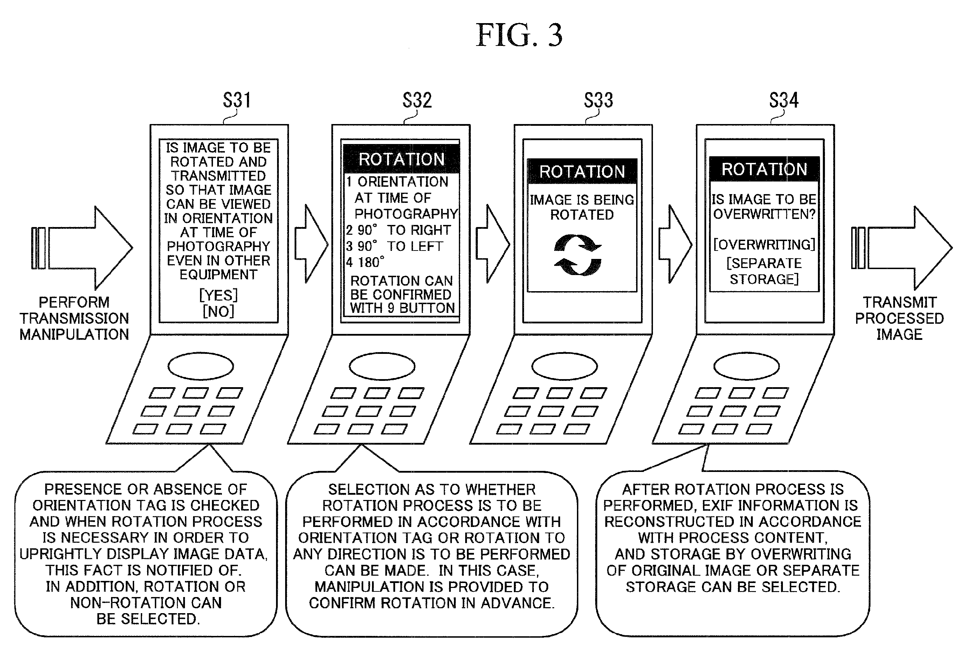

FIG. 3 is a schematic diagram illustrating a specific example of a manipulation screen of the present exemplary embodiment. FIG. 3 illustrates an example of a manipulation screen in a mobile phone with a camera function when a manipulation to transmit captured image data to the outside of the photographing apparatus, such as mail transmission or writing to a memory card, is made.

When a command to transmit an image to the outside of the photographing apparatus is input via the input unit 16 by the manipulator, a manipulation screen for a case in which presence or absence of an Orientation Tag is checked and a rotation process is determined to be necessary in order to uprightly display image data that is to be transmitted (step S31). Here, selection as to whether or not the rotation process is to be performed can be made so that the image data can be displayed in an upright orientation even in other equipment (a non-compliant system).

In the manipulation screen shown in step S31, if [Yes] is designated and the rotation is performed, the process proceeds to step S32; if [No] is designated and the rotation is not performed, the image data is directly transmitted without performing the rotation process or updating EXIF information.

If the selection is made to perform the rotation process, a manipulation screen for designating a rotation direction is displayed (step S32). Here, rotation in accordance with the Orientation Tag (1: orientation at the time of photography), and rotation to any direction (2: 90° to the right, 3: 90° to the left, and 4: 180°) can be selected. In addition, a manipulation (a 9 button) can also be made to confirm the rotation in advance.

Then, if the rotation in accordance with the Orientation Tag (1: orientation at the time of photography) or rotation to any direction (2: 90° to the right, 3: 90° to the left, and 4: 180°) is designated in the manipulation screen shown in step S32, a manipulation screen indicating that the designated rotation process is being executed is displayed (step S33).

When the rotation process ends, a manipulation screen for designating a method for storing the image data subjected to the rotation process is displayed (step S34). Here, storage by overwriting in which the image data subjected to the rotation process is stored by replacing original image data with the rotated image data ([overwriting]) or separate storage in which the image data is separately stored as new image data ([separate storage]) can be selected.

In any of the cases, EXIF information is updated in accordance with the image data subjected to the rotation process, the image data is stored with the update information, and the processed image data is transmitted to other equipment.

It is to be noted that in the above-described exemplary embodiment, while a basic configuration is as described above, but conversion of the size of the image and/or a file size may also be performed at the time of the rotation of the image data. In this case, the size of the transmitted image data can be reduced, and the load on a wireless network, the system load of a transmission destination, the storage capacity, or the like can be reduced.

Furthermore, the process of rotating the image data may be an automatic rotation process in accordance with the Orientation Tag completely, and the designation by the manipulator may be omitted. In this automation, whether or not to perform the automatic rotation process may be set.

Furthermore, in the EXIF format, there is a specification which records, together with the image data, additional information such as photography date and time, a place at the time of photography, the size of an image, a thumbnail image, or a free comment sentence, as well as the Orientation Tag relating to the rotation of the image data, and thus such additional information, update information, or the like may be recorded as new EXIF information in the image data subjected to the rotation process.

Furthermore, the image data to be transmitted after the rotation process may be transmitted after the image data is subjected to an image correction process for color tone, brightness, or the like.

Furthermore, when a transmission destination is known as a compliant system that performs automatic rotation by referring to the Orientation Tag, a structure may be employed in which the rotation of the image data to be transmitted is controlled only by changing the top-bottom orientation in accordance with the Orientation Tag without actually rotating the image data.

Furthermore, while the mobile phone with a digital camera function is used in the above-described exemplary embodiment, a typical digital camera which is not provided with the communication function unit 17 may be used.

Furthermore, the acceleration sensor unit 12 may have any other configuration as long as it is a sensor capable of sensing an orientation at the time of photography.

Furthermore, the data storage unit 14 may be a memory card that can be separated from a main body or a configuration including the memory card together with the data storage unit 14 may be employed.

In the above-described exemplary embodiment, when the image data stored in the EXIF format file is transmitted to the outside of the photographing apparatus, the image data is rotated to be in an upright orientation and then output to the outside. Accordingly, even in a non-compliant system that does not support the Orientation Tag, image data transmitted from the present photographing apparatus can be displayed in the upright orientation.

More specifically, the above-described exemplary embodiment provides the following exemplary advantageous effects.
As a first advantageous effect, when captured image data is transmitted to external equipment, a determination is made in advance as to whether or not rotation of an image and/or correction of image information or the like is required so that the image data can be displayed in a normal top-bottom orientation even in a system that does not support an automatic rotation process referring to the Orientation Tag, and if the rotation and/or the correction is required, execution of a rotation function and/or a correction function can be urged.

As a second advantageous effect, captured image data is converted into image data rotated to the top-bottom orientation at the time of photography or to any orientation in advance and is transmitted to the outside of a terminal, so that the image data can be displayed in the top-bottom orientation at the time of photography even in the non-compliant system that does not support an automatic rotation process referring to the Orientation Tag in an EXIF format.

As a third advantageous effect, the rotation to any orientation that is not in accordance with the Orientation Tag information is possible. Accordingly, wrong rotation based on wrong Orientation Tag information can be also corrected.

As a fourth advantageous effect, rotation not being performed can be selected in consideration of transmission to a compliant system capable of automatic rotation by referring to the Orientation Tag in advance. Accordingly, selection that does not cause image degradation due to decompression/recompression in a JPEG (Joint Photographic Experts Group) scheme, which is common in the EXIF format, can be made.

The present invention has been described with reference to the exemplary embodiment, but the present invention is not limited to the above-described exemplary embodiment. Various modifications that can be understood by those skilled in the art may be made to the configuration or details of the present invention within the scope of the present invention.

This application is based upon and claims the benefit of priority from Japanese Patent Application No. 2010-211805, filed on September 22, 2010, the disclosure of which is incorporated herein in its entirety by reference.

### INDUSTRIAL APPLICABILITY

The present invention may be used, for example, in a mobile phone with a digital camera function or a digital camera. In accordance with the present invention, even when image data in which the top-bottom orientation has been recorded is transmitted to equipment that is provided outside the photographing apparatus and does not support the image rotation function, the image data can be displayed in an appropriate top-bottom orientation in the transmission destination.

### Description of Reference Numerals

- 10: information processing unit
- 11: video sensor (camera) unit
- 12: acceleration sensor unit
- 13: program storage unit
- 14: data storage unit
- 15: output unit
- 16: input unit
- 17: communication function unit

## Claims

1. A photographing apparatus comprising:
a photographing unit;
an addition unit which adds data indicating a top-bottom orientation at the time of photography to image data of an image captured using the photographing unit and stores resultant image data;
a transmission unit which transmits the image data to external equipment; and
an editing unit which rotates the top-bottom orientation of the image corresponding to the image data prior to transmitting the image data to the external equipment.

2. The photographing apparatus according to claim 1, wherein the editing unit rotates the top-bottom orientation of the image corresponding to the image data based on the data indicating the top-bottom orientation added to the image data.

3. The photographing apparatus according to claim 1 or 2, further comprising a selection unit which selects whether or not the top-bottom orientation of the image corresponding to the image data is to be rotated in the editing unit,
wherein the editing unit rotates the top-bottom orientation of the image corresponding to the image data when rotation is designated in the selection unit, and does not rotate the top-bottom orientation of the image corresponding to the image data when rotation is not designated in the selection unit.

4. The photographing apparatus according to any one of claims 1 to 3, further comprising a designation unit which designates a rotation angle when the top-bottom orientation of the image corresponding to the image data is rotated in the editing unit,
wherein the editing unit rotates the top-bottom orientation of the image corresponding to the image data at the designated rotation angle when the rotation angle is designated in the designation unit.

5. The photographing apparatus according to any one of claims 1 to 4, further comprising a display unit for displaying the image data,
wherein the image data is displayed on the display unit to enable confirmation of whether the top-bottom orientation of the image corresponding to the image data is to be rotated prior to transmitting the image data to the external equipment.

6. The photographing apparatus according to any one of claims 1 to 3 and 5, wherein the editing unit rotates the image corresponding to the image data so that the top-bottom orientation of the rotated image becomes an upright orientation.

7. An image transfer method comprising:
rotating a top-bottom orientation of an image corresponding to image data prior to transmitting the image data to external equipment, the image data being captured using a photographing function and stored with data indicating the top-bottom orientation at the time of photography added; and
transmitting the image data of the image whose top-bottom orientation has been rotated to the external equipment.

8. A program for causing a computer of a photographing apparatus to execute:
an addition function of adding data indicating a top-bottom orientation at the time of photography to image data of an image captured using a photographing function provided in the photographing apparatus and storing resultant data;
an editing function of rotating the top-bottom orientation of the image corresponding to the image data prior to transmitting the image data to external equipment; and
a transmitting function of transmitting image data of an image whose top-bottom orientation has been rotated to the external equipment.
